# EUROPÄISCHE PATENTSCHRIFT

(11) **EP 2 445 688 B1**
(45) Veröffentlichungstag und Bekanntmachung des Hinweises auf die Patenterteilung: **03.04.2013**
(21) Anmeldenummer: 10729794.7
(22) Anmeldetag: 23.06.2010
(51) Int. Cl.: B27D 5/00, B23K 26/08

(54) **BEARBEITUNGSZENTRUM**
MACHINING CENTER
CENTRE DE TRAITEMENT

(30) Priorität: 25.06.2009 DE 102009030641
(43) Veröffentlichungstag der Anmeldung: 02.05.2012
(73) Patentinhaber: IMA Klessmann GmbH Holzbearbeitungssysteme, 32312 Lübbecke (DE)
(72) Erfinder: HAMPEL, Thomas, 32312 Lübbecke (DE); HOLLMER, Wilfried, 32369 Rahden (DE); SEIFERT, Uwe, 32361 Preußisch Oldendorf (DE)
(74) Vertreter: Schober, Mirko
(86) Internationale Anmeldenummer: PCT/EP2010/003834
(87) Internationale Veröffentlichungsnummer: WO 2010/149376

(56) Entgegenhaltungen:
- EP-A1- 0 382 125
- EP-A2- 1 800 813
- DE-A1- 3 939 866
- DE-A1- 19 630 074
- US-A- 4 659 902

## Beschreibung

### Technisches Gebiet

Die Erfindung betrifft ein Bearbeitungszentrum für Werkstücke, insbesondere Holzwerkstücke gemäss dem Oberbegriff des Anspruchs 1. Eine solche Vorrichtung ist aus der EP 1800813 A2 bekannt.

### Stand der Technik

In Bearbeitungszentren wird aus einem Werkstückrohling je nach Vorgabe eine Form mit beliebiger Kontur geformt. Dies können im einfachsten Fall Rechteckformen wie beispielsweise Holzpaneele sein, es kann sich aber auch um Freiformen mit beliebiger Außenkontur handeln. Üblicherweise entstehen entsprechende Konturen durch Sägen oder Fräsen. Die entstehenden Fräs- oder Sägekanten werden mittels Kantenbändern abgedeckt, um insbesondere eine optische Verbesserung der Kante aber auch einen Schutz derselben zu erreichen. Zum Bekanten wird ein Bekantungsaggregat eingesetzt, welches am Werkstück zum Bekanten vorbeigefahren werden kann. Die Befestigung der Kante erfolgt üblicherweise durch Schmelzkleber, der kurz vor dem Auftragen auf die Werkstückkante erwärmt wird. Der Schmelzkleber wird in einem am Bekantungs-aggregat mitgeführten Behälter bevorratet und darin aufgeschmolzen. Solche Bearbeitungszentren sind zum Beispiel aus EP 276 358 B1 und DE 39 14 461 C2 bekannt.

Aus EP 1 800 813 A2 ist bekannt, den Schmelzkleber oder einen sonstigen Klebstoff mittels Laserstrahlung zu aktivieren, so dass das Bekantungsaggregat zum Einen nicht unbedingt einen "Leimtopf" mitführen muss, zum Anderen kann die Aktivierung des Klebers unmittelbar vor dem Andrücken des Kantenbandes an der Werkstückkante erfolgen.

Der Einsatz von Schmelzklebern hat jedoch den Nachteil, dass zwischen Kantenband und Kante des Werkstückes eine in der Regel noch sichtbare Leimfuge entsteht, welche die Optik des fertigen Werkstücks und damit auch dessen Qualität nachteilig beeinflussen kann. Es ist daher in EP 1 163 864 A1 vorgeschlagen worden, zweikomponentige Kunststoffkantenbänder einzusetzen, deren Außenschicht aus einem härteren und deren innere Schicht aus einem demgegenüber weicheren Kunststoff gebildet wird. Anstelle des Einsatzes von Schmelzkleber wird das so ausgebildete Kantenband mittels Laserstrahlung aktiviert, indem die innenliegende weichere Kunststoffkomponente angeschmolzen wird, wobei die härtere äußere Schicht unbeeinträchtigt bleibt. Das fließende Material des so bestrahlten Kantenbandes verbindet sich mit der Kante des Werkstücks zum einen durch Eindiffundieren in vorhandene Zwischenräume, zum anderen durch Verschweißen mit thermoplastischen Anteilen des Werkstücks, etwa mit auflaminierten dünnen Beschichtungen oder dergleichen. Eine Leimfuge entsteht hierdurch nicht mehr und die Optik gerade im Übergangsbereich zwischen Kantenband und Kante wird hierdurch stark verbessert.

Die in EP 1 163 864 A1 genannte Verfahrensweise eignet sich jedoch nur für das sogenannte Durchlaufverfahren, bei welchem die zu bekantenden Werkstücke an einem ortsfesten Bekantungsaggregat vorbeigefahren werden, da der Laser aufgrund der relativ großen Laser-Apparatur ebenfalls ortsfest installiert ist. Bei der bekannten Apparatur trifft der Laserstrahl beim Durchlaufverfahren an einer ortfesten Austrittsstelle auf die aufzuschmelzende Innenseite des Kantenbandes, welches im Verlauf des Kantenbandes ebenfalls wie auch das Werkstück selbst an der Austrittstelle des Laserstrahls vorbeigeführt wird.

Nachteilig hieran ist, dass die in EP 1 163 864 A1 beschriebene Lasertechnik ausschließlich im Durchlaufverfahren einsetzbar ist und so also in einer Aufspannung nur jeweils eine in Durchlaufrichtung verlaufende Kante eines Werkstückes bekantet werden kann.

### Die Erfindung

Der Erfindung liegt die Aufgabe zugrunde, diesen Nachteil zu beseitigen und insbesondere auch die laserunterstützte Bekantung von Freiformen möglich zu machen.

Die Aufgabe wird durch ein Bearbeitungszentrum mit den Merkmalen des Anspruchs 1 gelöst. Vorteilhafte Ausführungsformen finden sich in den Unteransprüchen.

Erfindungsgemäß ist ein Bearbeitungszentrum mit einer Strahlenquelle für Laserstrahlung vorgesehen, bei welchem die aus der Strahlenquelle entnommene Laserstrahlung über einen Einkopplungsmechanismus an einer Strahlenaustrittsposition an das Bekantungsaggregat geführt werden kann; dabei sind Werkstück und Strahlenaustrittsposition in wenigstens in einer durch zwei Raumrichtungen definierten Ebene relativ zueinander ortsveränderlich ausgebildet. Die Erfindung ermöglicht also die Relativbewegung der Strahlenaustrittsposition relativ zum Werkstück bzw. zum Kantenmaterial in wenigstens zwei Dimensionen. Bevorzugt wird dabei ein flexibler Strahlengang gewählt, welcher längenveränderlich oder auch - etwa mittels Lichtleitern - räumlich flexibel geführt werden kann. Als bevorzugte Strahlungsquellen kommen Halbleiterlaser wie Diodenlaser oder auch CO₂-Laser in Betracht.

Nach einer Ausführungsform der Erfindung ist vorgesehen, dass das Werkstück und die Strahlenaustrittsposition auch in einem durch drei Raumrichtungen definierten Raum ortsveränderlich ausgebildet sind. Dies ermöglicht noch größere Flexibilität bei der Bearbeitung.

Die verwendete Laserstrahlung wird über einen wenigstens einen Strahlenweg umfassenden Strahlengang zur Strahlenaustrittsposition geführt. Als Strahlenwege können Röhren oder andere nach außen abschirmbare Wege verwendet werden. Die Abschirmbarkeit ist wesentlich, wenn z.B. die Laserstrahlung in einen sich über einen wesentlichen Teil des Bearbeitungszentrums, etwa parallel zur Aufstellebene desselben in einer ersten Richtung (X) erstreckenden ersten Strahlenweg eingekoppelt wird, da hier von der Strahlung große Wege zurückgelegt werden müssen und die Verwendung von Laserstrahlung aufgrund von einzuhaltenden Sicherheitsbestimmungen nicht vollkommen frei ablaufen darf. Das Bekantungsaggregat ist erfindungsgemäß dazu ausgelegt, den längs des ersten Strahlenweges verlaufenden Laserstrahl zur Strahlenaustrittsposition zu führen.

Nach einer weiteren bevorzugten Ausführungsform der Erfindung weist das Bekantungsaggregat wenigstens einen, bevorzugt in einer zum ersten Strahlenweg senkrechten Richtung, mit dem ersten Strahlenweg koppelbaren zweiten Strahlenweg auf, der in einer zweiten Richtung verläuft. Weiterhin ist bevorzugt, Strahlenwege in allen drei Raumrichtungen (X, Y, Z) zu führen, um die maximale Flexibilität für die Auskopplung der Laserstrahlung zu erhalten. Dazu ist unter anderem auch vorgesehen, dass das Bekantungsaggregat wenigstens einen, bevorzugt in einer zum ersten Strahlenweg senkrechten Richtung, mit dem ersten und/oder zweiten Strahlenweg koppelbaren weiteren Strahlenweg aufweist, der in einer dritten Richtung verläuft.

Sofern die Strahlenwege nicht parallel verlaufen, sind diese vorzugsweise durch Spiegel gekoppelt, welche den den jeweiligen Strahlenweg durchlaufenden Laserstrahl von einem Strahlenweg in den jeweils nächsten Strahlenweg umlenken. Die Strahlenwege können längenveränderlich ausgebildet sein, was z.B. durch verfahrbare Umlenkspiegel erreicht werden kann. Zur Abschirmung der Strahlung nach außen können handelsübliche Laserschutzbälge zum Einsatz kommen.

Zur Auskopplung aus dem Strahlengang, d.h. zur Führung des Laserstrahls auf das Kantenband, ist nach einer bevorzugten Ausführungsform der Erfindung vorgesehen, dass der Laserstrahl über einen Ringspiegel aus einem Strahlenweg zur Austrittsposition geführt wird. Zur Führung des Laserstrahls kann vorgesehen sein, dass der Strahlengang und/oder wenigstens ein Strahlenweg durch einen Lichtleiter gebildet ist.

Zudem kann nach einer Ausführungsform der Erfindung die Strahlenquelle drehfest mit der Drehachse des Bekantungsaggregats gekoppelt sein, so dass weitere Strahlenwege und damit immer auch ein Verlust an Strahlungsleistung vermieden werden können.

Schließlich kann neben einem beweglichen Bekantungsaggregat auch vorgesehen sein, dass das Bekantungsaggregat ortsfest und das Werkstück in wenigstens zwei eine Ebene XY bildenden Raumrichtungen beweglich ausgebildet ist. Die Bewegung kann translatorisch und/oder rotatorisch ausgeführt werden.

### Kurzbeschreibung der Zeichnungsabbildungen

Die Erfindung wird nachfolgend anhand der in den Figuren 1 bis 11 dargestellten Ausführungsbeispiele schematisch näher erläutert.
Figur 1 zeigt ein erfindungsgemäßes Bearbeitungszentrum in einer ersten Schnittdarstellung längs der Maschinenachse X.
Figur 2 zeigt das in Figur 1 dargestellte Bearbeitungszentrum in einer weiteren Schnittdarstellung längs der Linie A-B aus Figur 1 in Richtung der Maschinenachse Y.
Figur 3 zeigt eine Draufsicht auf das in den Figuren 1 und 2 gezeigte Bearbeitungszentrum.
Figur 4 zeigt eine Detailansicht auf das im Bearbeitungszentrum vorgesehene Bekantungsaggregat zur Bekantung eines Werkstücks in einer ersten Ausführungsform.
Figur 5 zeigt eine alternative Ausführungsform mit einer Strahlenführung durch den Schwenkpunkt des Bekantungsaggregates.
Figur 6 zeigt eine Draufsicht auf das in Figur 5 dargestellte Bekantungsaggregat.
Figur 7 zeigt eine weitere Draufsicht auf ein in der XY-Ebene gegenüber dem Werkstück verschwenkbares Bekantungsaggregat.
Figur 8 und 9 zeigen Draufsichten auf Werkstück und Bekantungsaggregat in einer Variante mit feststehendem Bekantungsaggregat und beweglich geführtem Werkstück.
Figur 10 zeigt eine weitere Ausführungsform in Schnittdarstellung, bei der der Strahlenweg durch die Schwenkachse des Bekantungsaggregats führt und die Strahlenquelle drehbeweglich gelagert und mit der Schwenkachse des Bekantungsaggregates drehfest verbunden ist.
Figur 11 zeigt schließlich eine Draufsicht auf ein alternatives Bekantungsaggregat, bei welchem als Strahlenweg ein Lichtleiter eingesetzt wird.

### Weg zur Ausführung der Erfindung

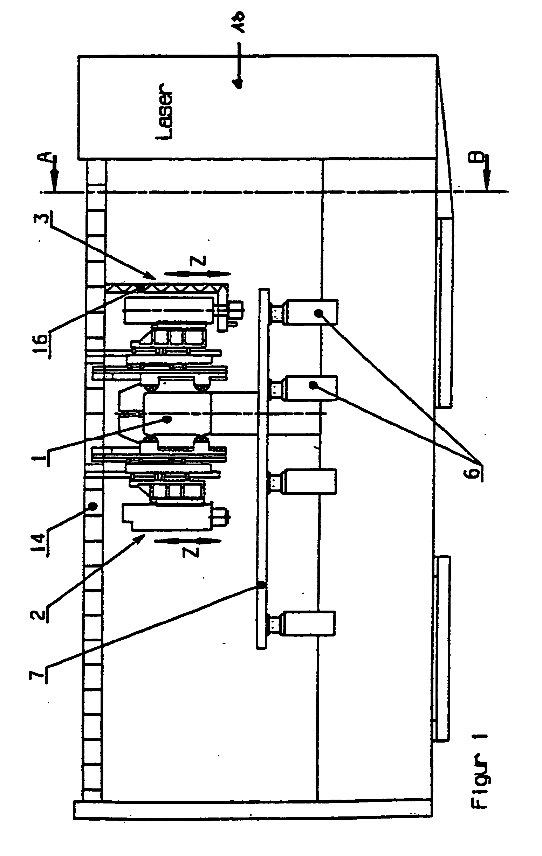

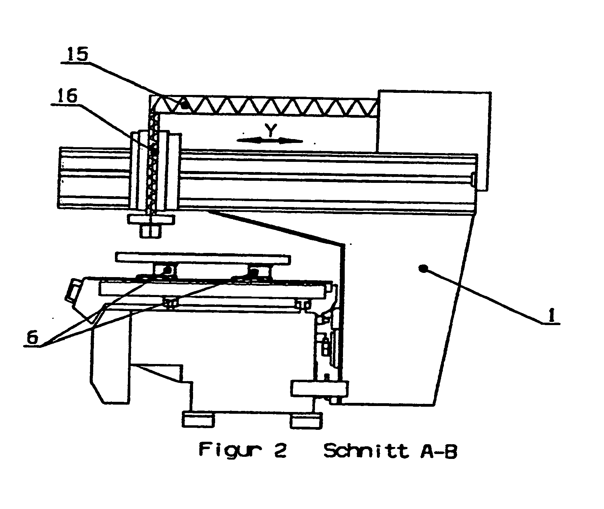

Das in den Figuren 1 bis 4 - auf die Figuren wird gleichermaßen Bezug genommen - gezeigte Bearbeitungszentrum weist einen in einer ersten Richtung X verfahrbaren Tragarm 1 auf, an dessen Vorderseite eine Frässpindel 2 und ein Bekantungsaggregat 3 vorgesehen sind, welche unabhängig voneinander in Richtung Y (vgl. Fig. 2) über Stellantriebe 4 bzw. 5 verfahrbar sind. Die Frässpindel 2 und das Bekantungsaggregat 3 können ferner über einen Vertikalhub in Z-Richtung (vgl. Fig. 1) in eine entsprechende Arbeitsposition gebracht werden. Über eine Spannvorrichtung 6, die bevorzugt Saugspanner umfasst, wird ein Werkstück 7 für einen vorgegebenen Bearbeitungsvorgang gehalten und zunächst mit der Frässpindel 2 bearbeitet.

Nach dem Fräsvorgang 2 ist eine Freiform 8 entstanden, welche anschließend über das Bekantungsaggregat 3 mit einem Kantenband 10 bekantet wird. Hierzu erfolgt aus einem Kantenbandmagazin 9 eine auf die Länge der zu bekantenden Form 8 bezogene Zuführung des Kantenbandes 10. Dabei wird die dem Werkstück 8 zugewandte Seite des Kantenbandes 10 mit Laserstrahlung bestrahlt. Die Laserstrahlung wird in einer Laserquelle 13 erzeugt und über einen im folgenden noch näher erläuterten Strahlengang zu einer Strahlenaustrittposition 11 in der Nähe des Kantenbandes 10 geführt. Die Strahlenaustrittposition 11 befindet sich bevorzugt vor der Druckrolle 12 des Bekantungsaggregates 3, mit welcher das bestrahlte Kantenband 10 an die Form 8 angedrückt wird. So wird das Kantenband 10 mit der Form 8 verschmolzen.

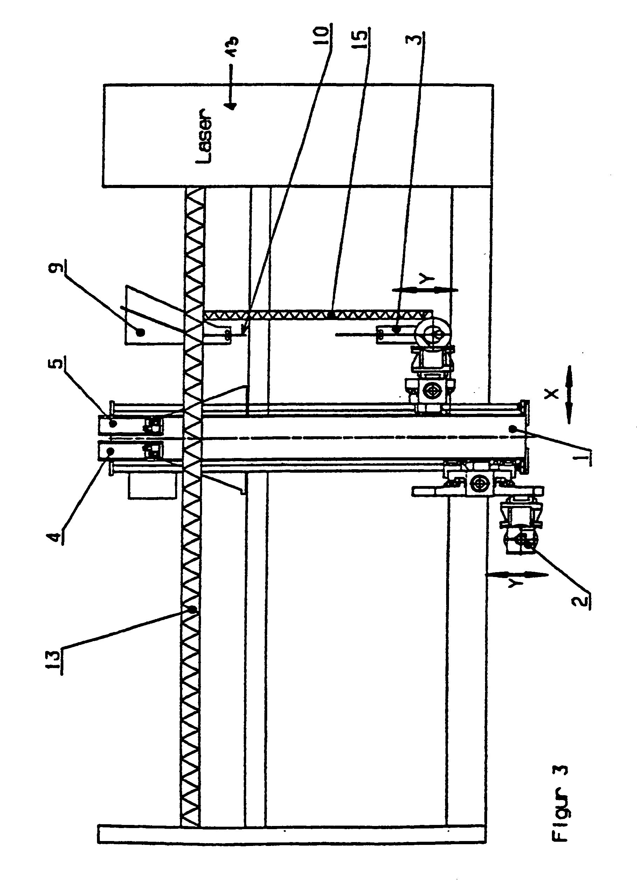

Wie in den Figuren 1 bis 4 gezeigt, führt der Strahlengang von der Strahlenquelle 13 zur Strahlenaustrittsposition 11 im gezeigten Beispiel über eine Mehrzahl von Strahlenwegen: aus der Strahlenquelle 13, bevorzugt ein CO2- oder Diodenlaser, wird die Strahlenquelle zunächst in einen ersten Strahlenweg 14 eingekoppelt, welcher sich in X-Richtung über einen wesentlichen Teil, bevorzugt die gesamte X-Erstreckung der Anlage, erstreckt. Mittels eines hier nicht dargestellten Umlenkspiegels kann aus dem Strahlenweg 14 die Strahlung abgegriffen und' über einen in X-Richtung verschieblichen zweiten Strahlenweg 15 geführt werden (Fig. 3). Der zweite Strahlenweg 15 ist längenveränderlich, hierzu können beispielsweise Laserschutzbälge vorgesehen werden.

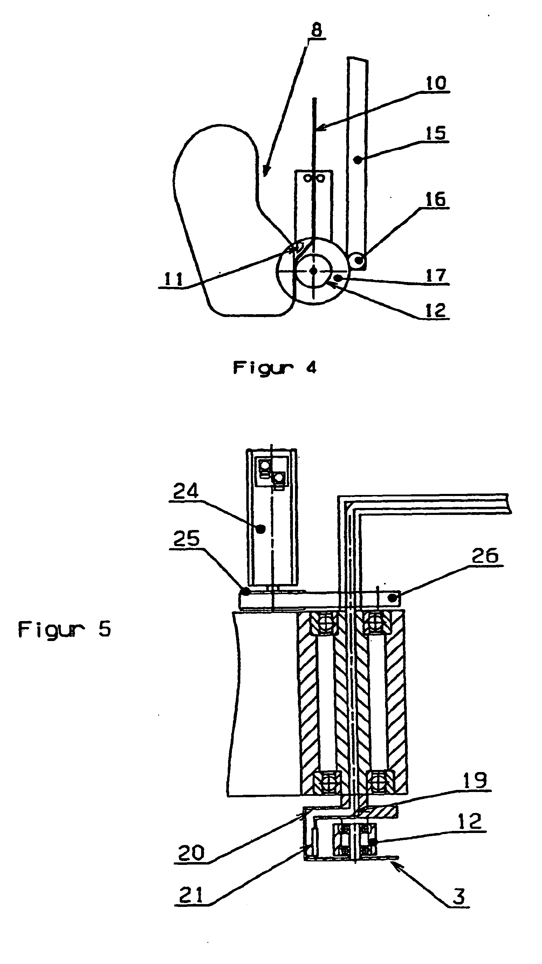

Ebenso ist ein dritter Strahlenweg 16 vorgesehen, der bevorzugt senkrecht zu den Strahlenwegen 14 und 15 verläuft und zum Bekantungsaggregat 3 in Z-Richtung führt. Die Umlenkung in den Strahlenweg 16 kann ebenfalls durch Umlenkspiegel erfolgen. In der in Figur 4 gezeigten Ausführungsform wird die aus dem Strahlenweg 16 kommende Strahlung auf einen Ringspiegel 17 geleitet, welcher eine Strahlenaustrittsposition 11 aufweist. Der Ringspiegel ist dabei so ausgebildet, dass unabhängig von der Verschwenkposition des Bekantungsaggregates 3, der aus dem Strahlenweg 16 kommende Laserstrahl immer die Strahlenaustrittsposition 11 erreicht und die Laserstrahlung auf das Kantenband gelenkt werden kann.

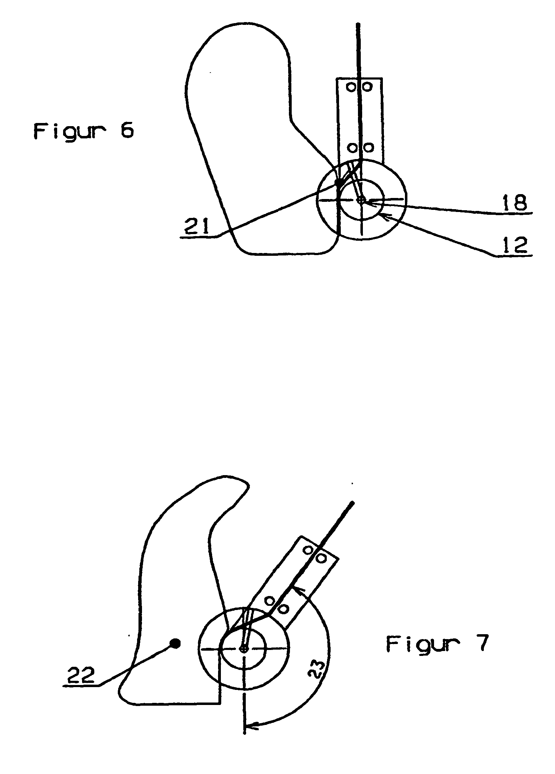

In Figur 5 bis 7 ist eine Alternative zum Ringspiegel gezeigt. Die Laserstrahlung wird hier - wie durch die gestrichelte Linie angedeutet - durch die Schwenk- oder Drehachse 18 des Bekantungsaggregats 3 geführt und im Bereich der Andruckrolle 12 über Spiegel 19, 20 zur Austrittsöffnung 21 geführt. Bei dieser Variante ist das Bekantungsaggregat 3 um einen Winkel 23 über einen Stellantrieb 24 mittels Stirnrädern 25, 26 schwenkbar ausgebildet.

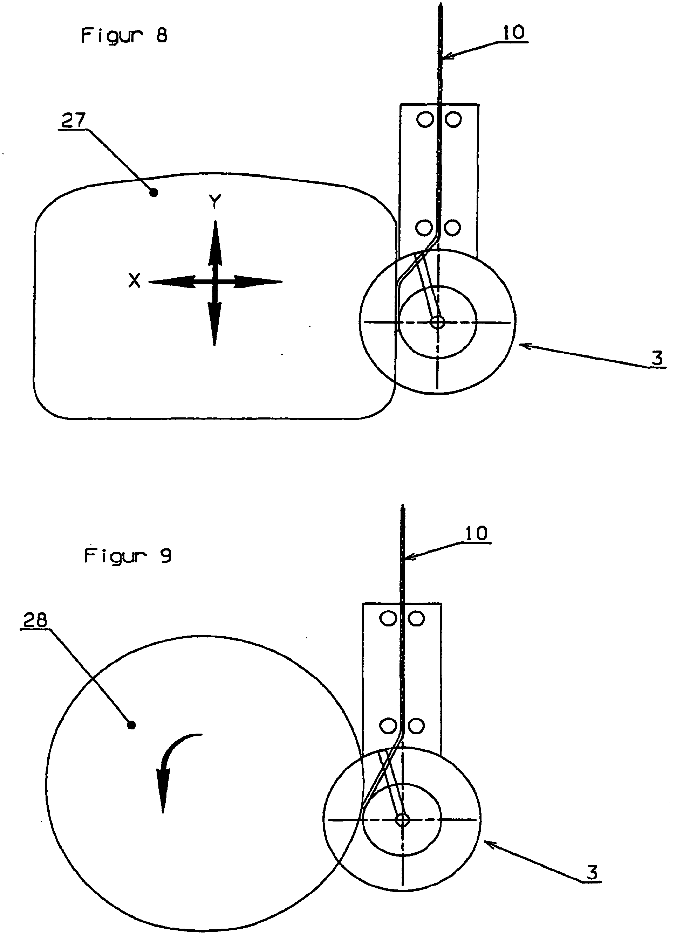

Alternativ ist es, wie in den Figuren 8 und 9 gezeigt, möglich, das Bekantungsaggregat 3 ortsfest zu halten und das Werkstück 27, 28 in wenigstens zwei Raumrichtungen X und Y bzw. in einer Ebene translatorisch (Fig. 8) oder rotatorisch (Fig. 9) zu bewegen, um das Kantenband 10 mit der Kante des Werkstücks 27, 28 zu verschmelzen.

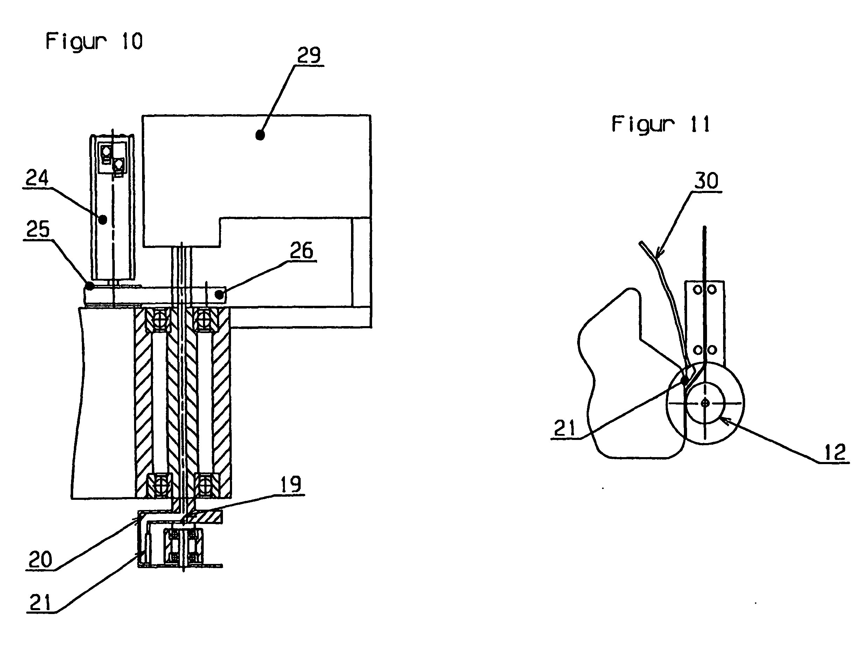

Figur 10 zeigt eine Variante der in Figur 5 gezeigten Ausführungsform, bei der wiederum der Strahlengang durch die Drehachse des Bekantungsaggregats 3 und über Umlenkspiegel 19, 20 zur Austrittsöffnung bzw. Strahlenaustrittsposition 21 führt. Im gezeigten Beispiel ist der Laser 29 - hier bevorzugt ein Diodenlaser - drehfest mit dem Bekantungsaggregat verbunden, so dass die Strahlenquelle 29 sich bei Drehung des Bekantungsaggregates mit dreht. Dies ermöglicht einen kürzeren Strahlengang und damit weniger Gefahrenstellen, an denen die Laserstrahlung ungewollt austreten kann. Zudem können Verluste an Leistung durch einen kürzeren Strahlengang reduziert werden.

Wie in Figur 11 gezeigt kann der Strahlengang ganz oder teilweise über einen flexiblen Lichtleiter 30 geführt werden. Aufwendige Strahlenwege können aufgrund der Flexibilität des Lichtleiters vermieden werden.

## Patentansprüche

1. Bearbeitungszentrum für Werkstücke (7, 8), insbesondere Holzwerkstücke, mit einem Bekantungsaggregat (3) zur Anbringung von Kantenbändern (10) an die mit einer vorgegebenen Konturform bearbeitete Kante des Werkstücks (7, 8), wobei das Werkstück (7, 8) und das Bekantungsaggregat (3) für das Anbringen des Kantenbandes (10) relativ zueinander bewegt werden können und eine, eine Laserstrahlung erzeugende Strahlenquelle (13) vorgesehen ist, welche dazu ausgelegt ist, das Kantenband (10) so zu präparieren, dass es beim Andrücken an die Kante des Werkstücks (7, 8) an diesem anhaftet, wobei die aus der Strahlenquelle (13, 29) entnommene Laserstrahlung über einen Einkopplungsmechanismus an einer Strahlenaustrittsposition (11, 21) an das Bekantungsaggregat (3) geführt werden kann, wobei Werkstück (7, 8) und die Strahlenaustrittsposition (11, 21) in wenigstens in einer durch zwei Raumrichtungen (X, Y) definierten Ebene relativ zueinander ortsveränderlich ausgebildet sind,
**dadurch gekennzeichnet,**
**dass** die Laserstrahlung über einen wenigstens einen Strahlenweg umfassenden Strahlengang zur Strahlenaustrittsposition geführt ist und wobei der Strahlengang und/oder wenigstens ein Strahlenweg im Wesentlichen durch eine senkrecht zu einer Werkstückebene (XY) verlaufenden Drehachse des Bekantungsaggregats (3) führt.

2. Bearbeitungszentrum nach Anspruch 1,
**dadurch gekennzeichnet,**
**dass** das Werkstück (7, 8) und die Strahlenaustrittsposition (11) auch in einem durch drei Raumrichtungen (X, Y, Z) definierten Raum ortsveränderlich geführt sind.

3. Bearbeitungszentrum nach Anspruch 1, oder 2,
**dadurch gekennzeichnet,**
**dass** die Laserstrahlung in einen sich über einen wesentlichen Teil des Bearbeitungszentrums, etwa parallel zur Aufstellebene desselben, in einer ersten Richtung (X) erstreckenden ersten Strahlenweg (14) eingekoppelt ist, wobei das Bekantungsaggregat (3) dazu ausgelegt ist, den längs des ersten Strahlenweges (14) verlaufenden Laserstrahl zur Strahlenaustrittsposition (11) zu führen.

4. Bearbeitungszentrum nach Anspruch 3,
**dadurch gekennzeichnet,**
**dass** das Bekantungsaggregat (3) wenigstens einen, bevorzugt in einer zum ersten Strahlenweg (14) senkrechten Richtung, mit dem ersten Strahlenweg (14) koppelbaren zweiten Strahlenweg (15) aufweist, der in einer zweiten Richtung (Y) verläuft.

5. Bearbeitungszentrum nach Anspruch 3 oder 4,
**dadurch gekennzeichnet,**
**dass** das Bekantungsaggregat (3) wenigstens einen, bevorzugt in einer zum ersten Strahlenweg (14) senkrechten Richtung, mit dem ersten und/oder zweiten Strahlenweg koppelbaren weiteren Strahlenweg (16) aufweist, der in einer dritten Richtung (Z) verläuft.

6. Bearbeitungszentrum nach einem der Ansprüche 3 - 5,
**dadurch gekennzeichnet,**
**dass** die Strahlenwege miteinander durch Spiegel gekoppelt sind, welche den den jeweiligen Strahlenweg durchlaufenden Laserstrahl von einem Strahlenweg in den jeweils nächsten Strahlenweg umlenken.

7. Bearbeitungszentrum nach einem der vorherigen Ansprüche,
**dadurch gekennzeichnet,**
**dass** der Laserstrahl über einen Ringspiegel (17) aus einem Strahlenweg (14, 15, 16) zur Strahlenaustrittsposition (11) geführt wird.

8. Bearbeitungsaggregat nach einem der vorherigen Ansprüche,
**dadurch gekennzeichnet,**
**dass** der Strahlengang und/oder wenigstens ein Strahlenweg durch einen Lichtleiter gebildet ist.

9. Bearbeitungszentrum nach einem der vorherigen Ansprüche,
**dadurch gekennzeichnet,**
**dass** die Strahlenquelle (13, 29) drehfest mit der Drehachse des Bekantungsaggregats (3) gekoppelt ist.

10. Bearbeitungszentrum nach einem der vorherigen Ansprüche,
**dadurch gekennzeichnet,**
**dass** das Bekantungsaggregat (3) ortsfest und das Werkstück in wenigstens zwei eine Ebene (XY) bildenden Raumrichtungen beweglich ausgebildet ist.

## Claims

1. Machining centre for workpieces (7, 8), in particular wooden workpieces, having an edging unit (3) for the application of edge strips (10) to the edge of the workpiece (7, 8) machined with a predefined contour form, wherein the workpiece (7, 8) and the edging unit (3) can be moved relative to each other for application of the edge strip (10), and a radiation source (13) generating a laser beam is provided, which is designed to prepare the edge strip (10) in such a way that it sticks to the edge of the workpiece (7, 8) when it is pressed against it, wherein the laser beam taken from the radiation source (13, 29) can be guided via an in-coupling mechanism at a beam output position (11, 21) to the edging unit (3), wherein the workpiece (7, 8) and the beam output position (11, 21) are formed in at least one plane defined by two spatial directions (X, Y) so that they can be changed in position relative to each other,
**characterised in that**
the laser beam is guided via a beam projection comprising at least one beam path to the beam output position, and wherein the beam projection and / or at least one beam path lead(s) substantially through a rotation axis of the edging unit (3) extending perpendicular to a workpiece plane (XY).

2. Machining centre according to claim 1,
**characterised in that**
the workpiece (7, 8) and the beam output position (11) are also formed in a space defined by three spatial directions (X, Y, Z) so that they can be changed in position.

3. Machining centre according to claim 1 or 2,
**characterised in that**
the laser beam is in-coupled into a first beam path (14) extending in a first direction (X) over a substantial part of the machining centre, approximately parallel to the erection plane thereof, wherein the edging unit (3) is designed to guide the laser beam extending along the first beam path (14) to the beam output position (11).

4. Machining centre according to claim 3,
**characterised in that**
the edging unit (3) comprises at least one second beam path (15) extending in a second direction (Y), which can be coupled to the first beam path (14) perpendicular to the first beam path (14).

5. Machining centre according to claim 3 or 4,
**characterised in that**
the edging unit (3) comprises at least one further beam path (16) extending in a third direction (Z) which can be coupled with the first and /or second beam path (14) perpendicular to the first beam path (14).

6. Machining centre according to one of the claims 3 - 5,
**characterised in that**
the beam paths are coupled to each other by reflectors which deflect the laser beam running through the respective beam path from one beam path into the next respective beam path.

7. Machining centre according to one of the preceding claims,
**characterised in that**
the laser beam is guided via an annular reflector (17) from a beam path (14, 15, 16) to the beam output position (11).

8. Machining unit according to one of the preceding claims,
**characterised in that**
the beam projection and / or at least a beam path is / are formed by a light conductor.

9. Machining centre according to one of the preceding claims,
**characterised in that**
the radiation source (13, 29) is coupled rotationally securely to the rotation axis of the edging unit (3).

10. Machining unit according to one of the preceding claims,
**characterised in that**
the edging unit (3) is formed in a fixed position and the workpiece is movable in at least two spatial directions forming a plane (XY).

## Revendications

1. Centre de traitement pour des pièces à traiter (7, 8), en particulier des pièces en bois, lequel comprend un groupe de bordage (3) pour l'application de bandes de chant (10) sur des chants de pièces à traiter (7, 8) présentant un contour de forme prédéterminée, sachant que, pour l'application de la bandes de chant (10), les pièces à traiter (7, 8) et le groupe de bordage (3) peuvent être déplacés les unes par rapport à l'autre et qu'est prévue une source de rayonnement (13), qui, générant un faisceau laser, est conçue pour préparer la bande de chant (10) de sorte que celle-ci adhère au chant de la pièce à traiter (7, 8), lorsqu'elle est pressée sur celui-ci, le faisceau laser, en provenance de la source de rayonnement (13, 29), pouvant être conduit au groupe de bordage (3), par l'intermédiaire d'un mécanisme de couplage, à l'endroit d'une sortie pour le faisceau (11, 21), sachant que la pièce à traiter (7, 8) et l'endroit de sortie pour le faisceau (11, 21) sont mobiles l'une par rapport à l'autre, au moins dans un plan défini par deux directions de l'espace (X, Y),
**caractérisé en ce que**
le faisceau laser est guidé vers l'endroit de sortie pour le faisceau en passant par au moins un passage pour le faisceau, qui comprend au moins un chemin pour le faisceau, et sachant que le passage pour le faisceau et / ou au moins un chemin pour le faisceau traverse sensiblement un axe de rotation du groupe de bordage (3), qui s'étend perpendiculairement à un plan (XY) de la pièce à traiter.

2. Centre de traitement selon la revendication 1, **caractérisé en ce que** les pièces à traiter (7, 8) et l'endroit de sortie pour le faisceau (11) sont aussi mobiles dans un espace, qui est défini par trois directions (X, Y, Z).

3. Centre de traitement selon revendication 1 ou 2, **caractérisé en ce que** le faisceau laser est couplé dans un premier chemin (14) pour le faisceau, qui s'étend, dans une première direction (X), sur une partie considérable du centre de traitement, sensiblement parallèlement au plan d'orientation de celui-ci, sachant que le groupe de bordage (3) est conçu de sorte à guider vers l'endroit de sortie pour le faisceau (11), le faisceau laser, qui s'étend le long du premier chemin (14) pour le faisceau.

4. Centre de traitement selon la revendication 3, **caractérisé en ce que** le groupe de bordage (3) présente au moins un deuxième chemin (15) pour le faisceau, qui, pouvant être couplé au premier chemin (14) pour le faisceau, de préférence dans une direction perpendiculaire au premier chemin (14) pour le faisceau, s'étend dans une deuxième direction (Y).

5. Centre de traitement selon revendication 3 ou 4, **caractérisé en ce que** le groupe de bordage (3) présente au moins un autre chemin (16) pour le faisceau, qui, pouvant être couplé au premier et / ou au deuxième chemin pour le faisceau, de préférence dans une direction perpendiculaire au premier chemin (14) pour le faisceau, s'étend dans une troisième direction (Z).

6. Centre de traitement selon l'une des revendications 3 à 5, **caractérisé en ce que** les chemins pour le faisceau sont couplés ensemble par des miroirs, qui renvoient chaque fois le faisceau laser, parcourant un chemin pour le faisceau, au chemin pour le faisceau suivant

7. Centre de traitement selon l'une des revendications précédentes, **caractérisé en ce que** le faisceau laser est guidé, d'un passage pour le faisceau (14, 15, 16) à l'endroit de sortie du faisceau (11), par l'intermédiaire d'un miroir optique en boucle (17).

8. Centre de traitement selon l'une des revendications précédentes, **caractérisé en ce que** le passage pour le faisceau et / ou au moins un chemin pour le faisceau est formé par un conducteur optique.

9. Centre de traitement selon l'une des revendications précédentes, **caractérisé en ce que** la source de rayonnement (13, 29) est couplée solidaire en rotation avec le groupe de bordage (3).

10. Centre de traitement selon l'une des revendications précédentes, **caractérisé en ce que** le groupe de bordage (3) est fixe et que la pièce à traiter est mobile dans au moins deux directions, qui forment un plan (XY).
